# EUROPÄISCHE PATENTSCHRIFT

(11) **EP 1 183 755 B1**
(45) Veröffentlichungstag und Bekanntmachung des Hinweises auf die Patenterteilung: **12.11.2003**
(21) Anmeldenummer: 00916697.6
(22) Anmeldetag: 30.03.2000
(51) Int. Cl.: H01R 29/00, H01H 9/02

(54) **ELEKTRISCHES INSTALLATIONSGERÄT**
ELECTRIC INSTALLATION DEVICE
APPAREIL D'INSTALLATION ELECTRIQUE

(30) Priorität: 28.05.1999 AT 95399
(43) Veröffentlichungstag der Anmeldung: 06.03.2002
(73) Patentinhaber: LEGRAND ÖSTERREICH GESELLSCHAFT M.B.H., 9241 Wernberg (AT)
(72) Erfinder: SCHULTSCHIK, Ditmar, A-9241 Wernberg (AT); DEMUTH, Jürgen, A-9241 Wernberg (AT)
(74) Vertreter: Weinzinger, Arnulf, Dipl.-Ing.
(86) Internationale Anmeldenummer: AT0000075
(87) Internationale Veröffentlichungsnummer: WO00074179

(56) Entgegenhaltungen:
- EP-A- 0 625 817
- DE-U- 9 411 392
- FR-A- 2 074 689

## Beschreibung

Die Erfindung betrifft ein elektrisches Installationsgerät mit einem elektrische Komponenten, wie z.B. Stromflusswinkel-Steuerkomponenten im Fall eines Dimmers, enthaltenden Einbauteil und einem zur Verbindung mit diesem vorgesehenen, ein oder mehrere Bedienungselement(e), wie z.B. Tasten oder Einstellregler, enthaltenden Bedienteil.

Üblicherweise weisen derartige elektrische Installationsgeräte, wenn sie für einen Einbau in einer Unterputzdose vorgesehen sind, einen z.B. rechteckigen bzw. quadratischen oder aber runden Tragrahmen auf, an dem eine Abdeckung angebracht wird, die beispielsweise ebenfalls rahmenförmig ist und in deren mittiger Öffnung als Bedienteil beispielsweise eine Taste, eine Schalterwippe, ein Einstellregler oder dergl. vorgesehen ist; vgl. z.B. EP 880 209 A oder EP 625 817 A. Dabei ist regelmäßig eine feste Montage-Ausrichtung zwischen dem Bedienteil und dem eigentlichen Installationsteil oder Leistungsteil, hier Einbauteil genannt, vorgesehen, und insbesondere wird die jeweils vorgegebene einzige Funktion des Installationsgerätes - z.B. Schalter, Dimmer, Bewegungsmelder usw. - realisiert. Zur Funktionserkennung kann auch eine gesonderte Auswerteelektronik im Einbauteil vorhanden sein, um so unterschiedliche Bedienteile nach ihrem Anbringen erkennen zu können.

Es ist nun Ziel der Erfindung, ein elektrisches Installationsgerät der vorstehend angeführten Art vorzusehen, bei dem mit ein und desselben Bedienteils je nach dessen Verbindung mit dem Einbauteil auf einfache Weise unterschiedliche Funktionen erzielt werden können, so dass je nach Bedarf beim Montieren des Installationsgerätes eine jeweils gewünschte Funktion von mehreren möglichen Funktionen einfach durch Wahl der Montage erzielt werden kann.

Das erfindungsgemäße Installationsgerät der eingangs angeführten Art ist dadurch gekennzeichnet, dass der Bedienteil mit dem Einbauteil unter Herstellung unterschiedlicher elektrischer Verbindungen in zumindest zwei gegeneinander, z.B. um 180°, verdrehten Positionen verbindbar ist, wobei in den verschiedenen Positionen des Bedienteils zufolge der unterschiedlichen elektrischen Verbindungen unterschiedliche Funktionen realisiert sind.

Beim vorliegenden Installationsgerät werden somit durch entsprechende Wahl der jeweiligen Ausrichtung, d.h. Position des Bedienteils relativ zum Einbauteil und die Kupplung des Bedienteils mit dem Einbauteil in dieser Position verschiedene Funktionen des Installationsgerätes insgesamt festgelegt. Die Funktionen können dabei an sich durchaus sehr verschieden voneinander sein, im Hinblick auf eine möglichst einfache Schaltungskonfiguration im Installationsgerät werden die verschiedenen Funktionen in der Regel jedoch einander ähnlich sein und sich beispielsweise nur durch Zusatzfunktionen unterscheiden. Dies ist auch aus Sicherheitsgründen zweckmäßig, da dann, wenn irrtümlich der Bedienteil in einer falschen Position montiert werden sollte, keine Beschädigungen oder Zerstörungen des Installationsgerätes oder aber von angeschlossenen Komponenten, z.B. Leuchten, erfolgen sollen. So ist es beispielsweise im Fall eines Dimmers als Installationsgerät denkbar, in einer von zwei Positionen des Bedienteils, der beispielsweise zwei Tasten (für "heller" bzw. "dunkler") aufweisen kann, eine Phasenanschnittsteuerung und in der anderen Position eine Phasenabschnittsteuerung des Laststroms zur jeweiligen Leuchte vorzusehen.

Selbstverständlich sind in an sich herkömmlicher Weise beim vorliegenden Installationsgerät, abgesehen von den erforderlichen elektrischen Kontakten, auch übliche mechanische Kupplungselemente am Einbauteil bzw. dazu passend am Bedienteil vorzusehen, wobei bei einer symmetrischen Anordnung dieser Kupplungselemente und der Realisierung von zwei verschiedenen Bedienteil-Positionen eine einfache Anordnung dieser mechanischen Kupplungselemente, z.B. Rastzungen bzw. Rasthaken, in einer Form wie bisher ausreichen kann.

Um eine möglichst einfache elektrische Schaltung sowie Anbringung von Kontakten zu erzielen, ist es von besonderem Vorteil, wenn der Bedienteil mit dem Einbauteil über zumindest zum Teil rotationssymmetrisch angeordnete Kontakte elektrisch verbindbar ist. Dabei können einzelne Kontakte in den verschiedenen Positionen des Bedienteils dieselbe Funktion haben, wie etwa eine Spannungsversorgung eines elektrischen Elements innerhalb des Bedienteils oder aber die Funktion des elektrischen Anschlusses zu dem oder den Bedienungselement(en).

Vorzugsweise sind im Einbauteil verschiedene Funktionen des Installationsgerätes durch entsprechende (verschiedene) elektrische Bauelemente enthalten, wobei dann nur je nach Aufstecken des Bedienteils, durch entsprechende Verbindung der elektrischen Kontakte zwischen Einbauteil und Bedienteil, die eine oder andere Funktion im Einbauteil aktiviert wird. Wenn der Einbauteil aus Platzgründen möglichst frei von zusätzlichen Bauelementen zu halten ist und andererseits wie erwähnt in der Regel die verschiedenen Funktionen des Installationsgerätes bevorzugt nur durch Zusatzfunktionen realisiert werden, ist es auch günstig, wenn die unterschiedlichen Funktionen im Bedienteil realisiert sind. An sich wäre es aber auch denkbar, die verschiedenen Funktionen im Einbauteil und Bedienteil kombiniert vorzusehen.

Für eine möglichst einfache, kompakte Verdrahtung und Kontaktierung ist es weiters günstig, wenn die Kontakte an den beim Zusammenbau aneinander zugewandten Seiten von Einbauteil und Bedienteil zentral angeordnet sind.

Es ist beispielsweise denkbar, zentral vier Kontakte am Einbauteil bzw. entsprechend am Bedienteil in einer quadratischen Anordnung vorzusehen, wobei je nach Aufsetzrichtung des Bedienteils die Kontaktelemente des Einbauteils mit den Kontaktelementen des Bedienteils in einer unterschiedlichen Zuordnung verbunden werden. Dies ist beispielsweise beim vorstehenden Ausführungsbeispiel mit der Beleuchtungsfunktion problemlos möglich. Es kann jedoch Situationen geben, wo es einfacher ist, an einem Teil, z.B. am Einbauteil, nur wenige Kontaktelemente, unter Umständen nur einen Kontakt, vorzusehen, wobei dieser eine Kontakt oder diese eine Gruppe von Kontakten wahlweise, je nach Aufsetzrichtung des Bedienteils am Einbauteil, mit unterschiedlichen Kontakten am anderen Teil, z.B. am Bedienteil, elektrisch verbunden wird. Dies wäre beispielsweise beim vorstehend bereits erwähnten Beispiel eines Dimmers mit Phasenanschnitt- oder Phasenabschnittsteuerung je nach Aufsteckrichtung des Bedienteils, denkbar. Demgemäß ist eine vorteilhafte Ausführungsform des erfindungsgemäßen Installationsgerätes dadurch gekennzeichnet, dass am Einbauteil oder aber Bedienteil nur ein Kontakt oder nur eine Gruppe von Kontakten außermittig vorgesehen ist, der bzw. die je nach Position des Bedienteils auf dem Einbauteil mit einem von mehreren, z.B. zwei einander diametral gegenüberliegenden, Kontakten bzw. einer von mehreren, z.B. zwei einander gegenüberliegenden, Kontaktgruppen am Bedienteil oder Einbauteil zusammenarbeitet, wobei die Kontakte bzw. Kontaktgruppen am Bedienteil oder Einbauteil den unterschiedlichen Funktionen zugeordnet sind.

Vorzugsweise kann im Bedienteil eine Beleuchtungsfunktion integriert sein, die in der einen von zwei Positionen des Bedienteils aktiviert und in der anderen deaktiviert ist. Dabei ist es weiters von Vorteil, wenn im Bedienteil eine Leuchtdiode vorgesehen ist, die in der einen Position in Durchlassrichtung und in der anderen Position in Sperrrichtung gepolt ist. Bei einer derartigen Zusatzfunktion ist nur eine ganz einfache Verdrahtung im Bedienteil erforderlich, abgesehen vom Einbau der Leuchtdiode samt erforderlichem Vorwiderstand, so dass eine Realisierung dieser Zusatzfunktion im Bedienteil problemlos möglich ist.

Andere Anwendungen des Installationsgerätes, mit Funktionswahl durch Wahl der Montage-Position des Bedienteils am Einbauteil, sind beispielsweise Geräte mit spezifischen Schaltfunktionen, z.B. mit unterschiedlichen Ein- bzw. Ausschaltflanken; oder aber insbesondere auch eine Ausbildung, bei der in einer von zwei Bedienteil-Positionen ein unmittelbares Ein- bzw. Ausschalten eines Laststromes und in der anderen Position ein Ein- bzw. Ausschalten mit allmählichem Anheben bzw. Absenken des Laststroms (Softstart bzw. Softstop) vorgesehen ist. Auch ist es im Fall eines Dimmers günstig, wenn in einer der Bedienteil-Positionen eine Phasenanschnittsteuerung für einen Laststrom und in einer anderen Bedienteil-Position eine Phasenabschnittsteuerung vorgesehen ist. Im Fall eines Dimmers kann weiters mit Vorteil auch vorgesehen werden, dass in einer ersten Bedienteil-Position eine Phasenanschnittsteuerung für einen Laststrom, in einer zweiten Bedienteil-Position eine kombinierte Phasenanschnitt- und Phasenabschnittsteuerung und in einer dritten Bedienteil-Position eine Phasenabschnittsteuerung realisiert sind. Noch eine andere vorteilhafte Möglichkeit besteht in der Realisierung eines Bewegungsmelders oder aber Anwesenheitsdetektors in den verschiedenen Funktionen. Im Fall eines Bewegungsmelders kann der Bedienteil einen asymmetrischen Detektionswinkel definieren und je nach Ausrichtung des Bedienteils können unterschiedliche Detektionsbereiche festgelegt sein. Damit kann z.B. je nachdem, ob die mittlere Detektiereinrichtung steiler oder weniger steil abwärts zeigt, eine Detektion von Kleintieren (Haustieren) aktiviert bzw. deaktiviert werden. Noch eine andere vorteilhafte Möglichkeit besteht beispielsweise darin, dass in einer Bedienteil-Position ein unmittelbares Schalten, z.B. Einschalten, und in einer anderen Bedienteil-Position ein Schalten, z.B. Einschalten, mit zeitlicher Verzögerung vorgesehen ist. Auf diese Weise kann je nach Bedarf eine Ein- und/oder Ausschaltverzögerung vorgesehen oder aber ein unmittelbares Schalten realisiert werden.

Die Erfindung wird nachstehend anhand von besonders bevorzugten Ausführungsbeispielen, auf die sie jedoch nicht beschränkt sein soll, unter Bezugnahme auf die schematischen Zeichnungen weiter erläutert. Es zeigen:
Fig.1 und 2 zusammen schematisch ein elektrisches Installationsgerät, wobei Fig.1 den Bedienteil und Fig.2 den Einbauoder Leistungsteil des Installationsgerätes zeigt;
Fig.3 eine im Einbauteil gemäß Fig.2 beispielsweise vorhandene Schaltung in Form eines Blockschaltbildes;
Fig.4 eine im Bedienteil enthaltene Schaltung mit einer Leuchtdiode für eine Beleuchtungsfunktion, wobei die Situation der Bedienteil-Position mit aktivierter Beleuchtung entspricht;
Fig.4a die Schaltung gemäß Fig.4, jetzt jedoch gemäß einer Stellung, in der der Bedienteil um 180° verdreht mit dem Einbauteil gemäß Fig.2 und 3 verbunden ist, und in der die Beleuchtung am Bedienteil deaktiviert ist;
Fig.5 eine Draufsicht auf einen gegenüber Fig.1 modifizierten Bedienteil; und
Fig.6 eine schematische Draufsicht auf einen zum Bedienteil gemäß Fig.5 gehörigen Einbau- oder Leistungsteil, mit drei Kontaktgruppen, entsprechend drei Bedienteil-Positionen.

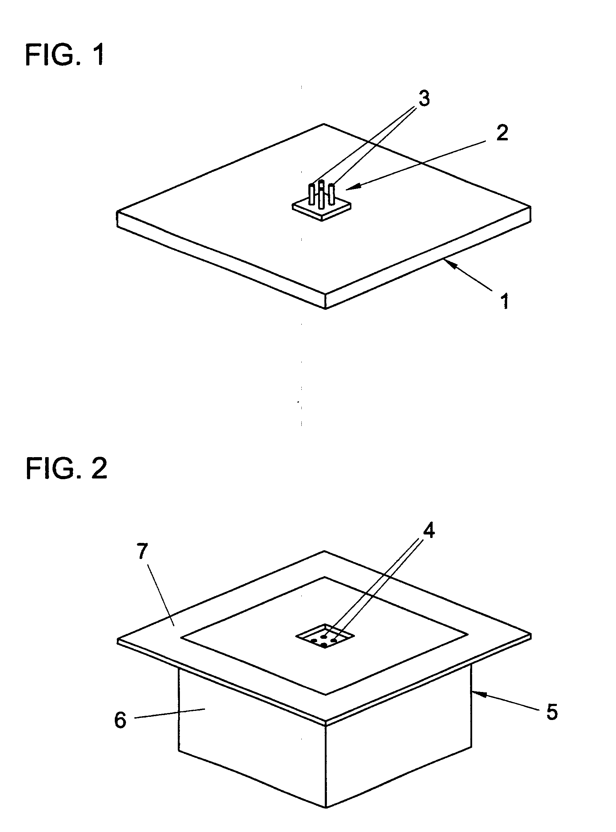

In Fig.1 ist nur ganz schematisch in schaubildlicher Darstellung ein Bedienteil 1 gezeigt, der plattenförmig ist und eine mittige Kontaktgruppe 2 mit vier Einzelkontakten in Form von Kontaktstiften 3 aufweist. Diese Kontaktstifte 3 passen zu entsprechenden Kontaktaufnahmen 4 in der Mitte der Oberseite eines Einbauteils 5, auch Leistungsteil genannt, welcher in Fig.2 schaubildlich gezeigt ist. Dieser Einbauteil 5 weist in üblicher Weise einen schematisch gezeigten Sockelkörper oder Installationsteil 6 sowie einen Rahmen 7 auf. Die mechanischen Kupplungs- bzw. Verbindungsteile für das Verbinden des plattenförmigen Bedienteils 1 (selbstverständlich dann mit den Kontakten 3 nach unten gewandt) mit dem Einbauteil 5 können in an sich herkömmlicher Weise, z.B. als Schnapp- bzw. Rastelemente und/oder mit Schraubverbindungen usw., ausgebildet sein und sind in der Zeichnung nicht näher veranschaulicht.

Da die Kontaktstifte 3 bzw. Kontaktaufnahmen 4 gemäß den Eckpunkten eines Quadrates in der Mitte des Bedienteiles 1 bzw. des Einbauteiles 5 angeordnet sind, wären an sich insgesamt vier verschiedene Positionen denkbar, in denen der Bedienteil 1 mit dem Einbauteil 5 verbunden werden kann. Demgemäß könnten je nach Aufsteckrichtung, entsprechend einer der vier gegeneinander jeweils um 90° verdrehten Positionen des Bedienteiles 1, vier verschiedene Funktionen realisiert werden, wenn die Schaltungskonfigurationen entsprechend vorgesehen sind. In der Regel genügt es jedoch, weniger Funktionen vorzusehen, wie insbesondere zwei, und daher können auch nur weniger Positionen des Bedienteiles 1 relativ zum Einbauteil 5, beispielsweise zwei um 180° gegeneinander verdrehte Positionen, vorgesehen werden.

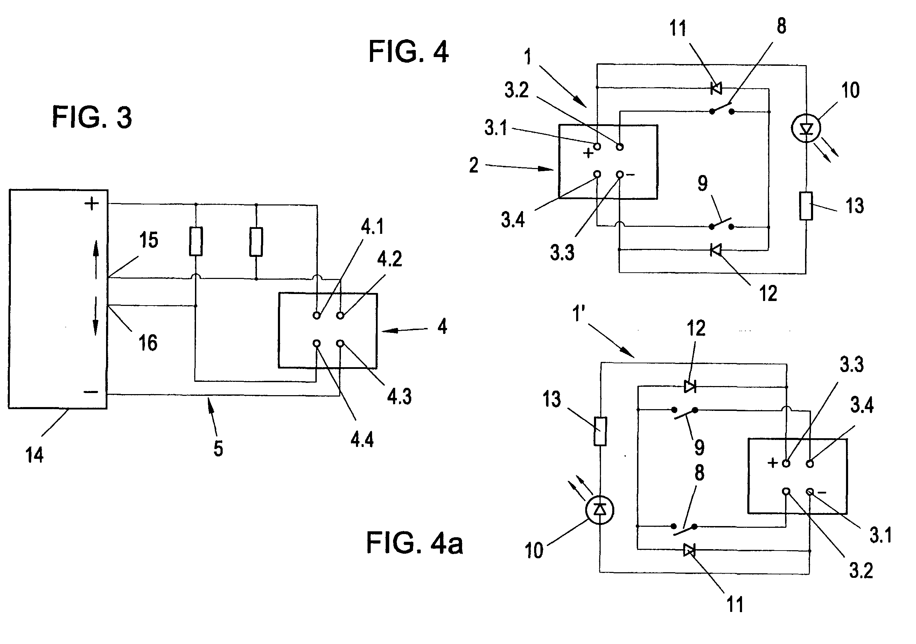

Ein Beispiel für ein derartiges Installationsgerät mit zwei Funktionen entsprechend zwei um 180° gegeneinander verdrehten Positionen des Bedienteiles 1 ist in Fig.3 und in Fig.4 bzw. 4a veranschaulicht. Der Bedienteil 1 hat dabei gemäß beispielsweise Fig.4 bzw. 4a zwei Tasten 8, 9 und eine Leuchtdiode 10. Weiters sind zwei Dioden 11, 12 vorgesehen, welche die einen Tastenkontakte mit jeweils einem der Kontaktstifte 3, nämlich im Einzelnen mit den Kontaktstiften 3.1 und 3.3, verbinden. Mit den beiden anderen Kontaktstiften 3.2 und 3.4 sind die Wurzeln der Tasten 8, 9 verbunden. Mit den Kontaktstiften 3.1 und 3.3 ist weiters die Serienschaltung der Leuchtdiode 10 mit einem Vorwiderstand 13 verbunden.

In entsprechender Weise sind in Fig.3 die einzelnen Kontaktaufnahmen 4 des Einbauteiles 2 mit 4.1, 4.2, 4.3 und 4.4 bezeichnet, wobei die Kontaktaufnahmen 4.1 und 4.3 mit dem positiven Pol (+) bzw. negativen Pol (-) einer Versorgungsspannungsquelle innerhalb einer im Übrigen nicht näher dargestellten Auswert- und Steuerschaltung 14 verbunden sind. Diese Steuerschaltung 14 weist zwei Eingänge 15, 16 auf, die an die Kontaktaufnahmen 4.2 bzw. 4.4 angeschlossen sind, und die im Falle eines Dimmers den Funktionen "auf" bzw. "ab" - entsprechend der oberen bzw. unteren Taste des Bedienteiles 1 - zugeordnet sind, was in Fig.3 durch entsprechend gerichtete Pfeile angedeutet ist. Damit kann z.B. die Helligkeit einer als Last an das Installationsgerät angeschlossenen Lampe (nicht gezeigt) stärker oder schwächer gestellt werden. Selbstverständlich ist diese Auf- bzw. Ab-Steuerung nur beispielhaft, und es kann damit auch z.B. eine Aus/Ein-Schaltfunktion etc. verknüpft sein.

Mit dem Bedienteil 1 in der einen Position, entsprechend der Darstellung in Fig.4, ist die eine Taste 8 die obere Taste, wogegen die andere Taste 9 die untere Taste ist, und die Klemmen 3.1 bzw. 3.3 sind mit dem Pluspol bzw. Minuspol der Versorgungsspannung (Kontaktaufnahme 4.1 bzw. 4.3 am Einbauteil 5) verbunden. Die obere Taste 8 ist über den Kontaktstift 3.2 und die Kontaktaufnahme 4.2 mit dem "auf"-Eingang 15 verbunden, wogegen die untere Taste 9 über den Kontaktstift 3.4 und die Kontaktaufnahme 4.4 mit dem "ab"-Eingang 16 am Einbauteil 5 verbunden ist. Ein Strom kann von dem eine positive Versorgungsspannung aufweisenden Kontaktstift 3.1 über die Leuchtdiode 10 und den Widerstand 13 zum an der negativen Versorgungsspannung liegenden Kontaktstift 3.3 fließen, so dass die Leuchtdiode 10 leuchtet.

Wenn nun der Bedienteil 1 um 180° verdreht wird, wird eine Situation erhalten, wie sie in Fig.4a veranschaulicht ist. In dieser Position ist die Taste 9 die obere Taste, welche allerdings wiederum - über den Kontaktstift 3.4 - mit der Kontaktaufnahme 4.2 und daher mit dem "auf"-Eingang 15 verbunden ist, so dass diese Zuordnung: "obere Taste" - "auf"-Funktion" gewahrt bleibt; Ähnliches gilt für die "untere Taste", nunmehr die Taste 8, die mit dem "ab"-Eingang 16 verbunden ist. Jedoch ist jetzt der Kontaktstift 3.3 mit der die positive Versorgungsspannung führenden Kontaktaufnahme 4.1 verbunden, und der Kontaktstift 3.1 ist mit der negativen Versorgungsspannung an der Kontaktaufnahme 4.3 verbunden, was bedeutet, dass die Leuchtdiode 10 in der Sperrrichtung gepolt ist. In dieser Position gemäß Fig.4a bleibt daher die Leuchtdiode 10 dunkel.

In entsprechender Weise, wie vorstehend beispielhaft für eine Beleuchtungsfunktion im Bedienteil 1 angegeben, können beliebige, an sich herkömmliche Funktionen - mit entsprechender Schaltung - für die verschiedensten Zwecke realisiert werden. Beispielsweise kann die Steckverbindung zwischen Bedienteil 1 und Einbauteil 5 so ausgelegt werden, dass je nach Aufsteckrichtung ein Aktivieren bzw. Deaktivieren eines sogen. Softstarts (langsames Erhöhen der Verbraucherleistung bis zu einem vorgegebenen, z.B. maximalen Wert) und eines sogen. Softstops (langsames Absenken der Verbraucherleistung bis zum Abschalten der Last) möglich ist. Dabei kann die Schaltung auch so ausgelegt sein, dass nicht bloß aufgrund der jeweiligen Kontaktierung die Schaltung entsprechend komplettiert wird, sondern dass einfach vom Einbau- oder Leistungsteil 5 die Aufsteckrichtung des Bedienteiles 1 erkannt wird und demgemäß im Einbauteil 5, in dem die verschiedenen Funktionen realisiert sind, auf die eine oder andere Funktion geschaltet wird.

Eine andere, in der Zeichnung nicht näher veranschaulichte Möglichkeit besteht darin, die Art der Ansteuerung bei einem Dimmer durch die Aufsteckrichtung des Bedienteiles 1 auf dem Einbauteil 5 festzulegen. Der Dimmer ist beispielsweise so ausgelegt, dass er eine Last - z.B. eine Lampe - sowohl im Phasenanschnitt als auch im Phasenabschnitt steuern kann, und je nach Position des Bedienteiles 1 auf dem Einbauteil 5 erfolgt entweder eine Phasenanschnittsteuerung oder aber eine Phasenabschnittsteuerung.

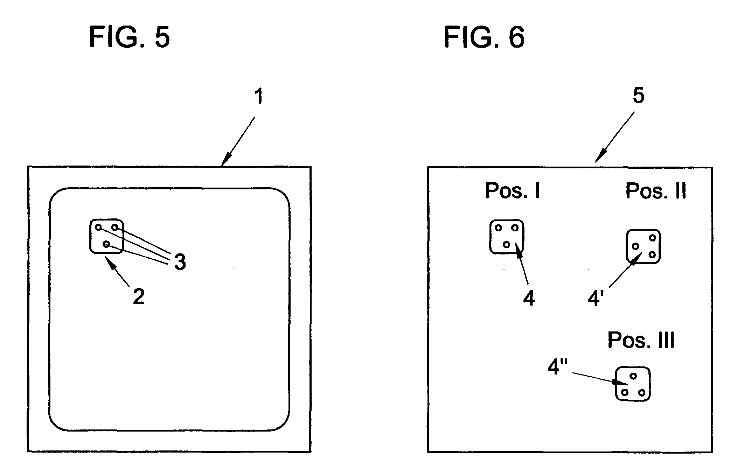

Eine weitere Möglichkeit für eine derartige Auswahl von Steuermöglichkeiten bei Dimmern wird nachstehend noch näher anhand der Fig.5 und 6 erläutert werden.

Weiters kann eine Anwendung einer Funktionswahl durch entsprechende Bedienteil-Positionierung bei sogen. Nachlaufschaltern erfolgen: Ein - an sich bekannter - Nachlaufschalter (nicht gezeigt) wird beispielsweise in Sanitärräumen eingesetzt, um ein Gerät, wie insbesondere einen Ventilator, beim Abschalten des Lichts um eine vorgegebene Verzögerungszeit, etwa einige Minuten, verzögert auszuschalten. Durch Ändern der Position bzw. Aufsteckrichtung des Bedienteiles 1 kann nun festgelegt werden, ob der Ventilator beim Einschalten des Lichts sofort anlaufen soll oder ebenfalls mit einer Verzögerung, etwa von einigen Minuten, gestartet werden soll.

Noch eine andere Möglichkeit ist dadurch gegeben, die Auswahl zwischen einer Dimmer-Funktion einerseits und einer elektronischen Schalter-Funktion mit Komfortfunktionen, wie Softstart, Softstop, einstellbare Helligkeit usw., andererseits durch Ändern der Position des Bedienteils 1 zu treffen.

Im Falle eines Bewegungsmelders können durch unterschiedliche Bedienteil-Positionen unterschiedliche Detektionsbereiche gewählt werden. Wenn beispielsweise ein Bewegungsmelder in vertikaler Richtung einen asymmetrischen Detektionswinkel hat, wie etwa 0° nach unten, 75° nach oben, kann durch Ändern der Aufsteckrichtung des Bedienteiles 1 um 180° auf einen Detektionswinkel von z.B. 75° nach unten und 0° nach oben eingestellt werden, wobei keine zusätzliche elektronische Dekodierung der Aufsteckrichtung erforderlich ist. Damit kann beispielsweise eine Detektion von Haustieren oder allgemein Kleintieren aktiviert werden, wogegen in der erstgenannten Position ein "Unterkriechen" des Bewegungsmelders durch Kleintiere möglich wäre.

In den Fig.5 und 6 ist schematisch ein Beispiel für drei mögliche Aufsteckpositionen des Bedienteiles 1 auf dem Einbauteil 5 veranschaulicht. Der Bedienteil 1 weist dabei in einem Eckbereich eine Gruppe 2 von drei Kontaktstiften 3 auf, wogegen der Einbauteil 5 drei Gruppen von jeweils drei entsprechenden Kontaktaufnahmen 4 bzw. 4' bzw. 4" aufweist. Dadurch werden insgesamt drei mögliche Positionen des Bedienteiles 1 erhalten, die jeweils um 90° gegeneinander verdreht sind. In der ersten Position ("Pos. I") kann beispielsweise im Falle der Realisierung eines Dimmers durch das Installationsgerät 1, 2 eine Phasenanschnittssteuerung für die angeschlossene Last vorgesehen werden, wogegen in der Position II eine Funktion mit kombinierter Phasenanschnitt- und -abschnittsteuerung realisiert wird, wie sie z.B. für Leuchtstofflampen mit höherer Zündspannung zweckmäßig ist. In der dritten Position ("Pos. III") kann schließlich eine Phasenabschnittsteuerung für die Last erfolgen.

Schaltungskomponente zur Realisierung derartiger Funktionen wie vorstehend erläutert (vgl. auch die Steuerschaltung 14 in Fig.3) sind an sich in verschiedensten Formen bekannt, für sich nicht Gegenstand dieser Erfindung und daher hier nicht weiter zu erläutern.

## Patentansprüche

1. Elektrisches Installationsgerät mit einem elektrische Komponenten enthaltenden Einbauteil (5) und einem zur Verbindung mit diesem vorgesehenen, wenigstens ein Bedienungselement (8, 9) enthaltenden Bedienteil (1), **dadurch gekennzeichnet, dass** der Bedienteil (1) mit dem Einbauteil (5) unter Herstellung unterschiedlicher elektrischer Verbindungen (3, 4) in zumindest zwei gegeneinander, z.B. um 180°, verdrehten Positionen verbindbar ist, wobei in den verschiedenen Positionen des Bedienteils (1) zufolge der unterschiedlichen elektrischen Verbindungen unterschiedliche Funktionen realisiert sind.

2. Installationsgerät nach Anspruch 1, **dadurch gekennzeichnet, dass** der Bedienteil (1) mit dem Einbauteil (5) über zumindest zum Teil rotationssymmetrisch angeordnete Kontakte (3, 4) elektrisch verbindbar ist.

3. Installationsgerät nach Anspruch 1 oder 2, **dadurch gekennzeichnet, dass** die unterschiedlichen Funktionen im Einbauteil (5) realisiert sind.

4. Installationsgerät nach Anspruch 1 oder 2, **dadurch gekennzeichnet, dass** die unterschiedlichen Funktionen im Bedienteil (1) realisiert sind.

5. Installationsgerät nach einem der Ansprüche 1 bis 4, **dadurch gekennzeichnet, dass** die Kontakte (3, 4) an den beim Zusammenbau aneinander zugewandten Seiten von Einbauteil (5) und Bedienteil (1) zentral angeordnet sind (Fig.1, 2).

6. Installationsgerät nach einem der Ansprüche 1 bis 5, **dadurch gekennzeichnet, dass** an einem der Teile, Einbauteil (5) oder Bedienteil (1), nur ein Kontakt oder nur eine Gruppe (2) von Kontakten (3) außermittig vorgesehen ist, der oder die je nach Position des Bedienteils (1) auf dem Einbauteil (5) mit einem von mehreren Kontakten bzw. einer von mehreren Kontaktgruppen (4, 4', 4") am anderen der Teile, Bedienteil (1) oder Einbauteil (5), zusammenarbeitet, wobei die Kontakte bzw. Kontaktgruppen am anderen Teil, Bedienteil (1) oder Einbauteil (5), den unterschiedlichen Funktionen zugeordnet sind.

7. Installationsgerät nach Anspruch 6, **dadurch gekennzeichnet, dass** zwei Kontakte bzw. Kontaktgruppen (4, 4") am anderen Teil, Bedienteil (1) oder Einbauteil (5) einander diametral gegenüberliegend angeordnet sind.

8. Installationsgerät nach einem der Ansprüche 1 bis 7, **dadurch gekennzeichnet, dass** im Bedienteil (1) eine Beleuchtungsfunktion integriert ist, die in der einen von zwei Positionen des Bedienteils (1) aktiviert und in der anderen deaktiviert ist.

9. Installationsgerät nach Anspruch 8, **dadurch gekennzeichnet, dass** im Bedienteil (1) eine Leuchtdiode (10) vorgesehen ist, die in der einen Position in Durchlassrichtung und in der anderen Position in Sperrrichtung gepolt ist.

10. Installationsgerät nach einem der Ansprüche 1 bis 7, **dadurch gekennzeichnet, dass** Schaltfunktionen mit unterschiedlichen Einoder Ausschaltflanken vorgesehen sind.

11. Installationsgerät nach einem der Ansprüche 1 bis 7, in Form eines Schalters oder Dimmers, **dadurch gekennzeichnet, dass** in einer von zwei Bedienteil-Positionen ein unmittelbares Ein- bzw. Ausschalten eines Laststromes und in der anderen Position ein Ein- bzw. Ausschalten mit allmählichem Anheben bzw. Absenken des Laststroms (Softstart bzw. Softstop) vorgesehen ist.

12. Installationsgerät nach einem der Ansprüche 1 bis 7, in Form eines Dimmers, **dadurch gekennzeichnet, dass** in einer der Bedienteil-Positionen eine Phasenanschnittsteuerung für einen Laststrom und in einer anderen Bedienteil-Position eine Phasenabschnittsteuerung vorgesehen ist.

13. Installationsgerät nach Anspruch 7, in Form eines Dimmers, **dadurch gekennzeichnet, dass** in einer ersten Bedienteil-Position (I) eine Phasenanschnittsteuerung für einen Laststrom, in einer zweiten Bedienteil-Position (II) eine kombinierte Phasenanschnitt- und Phasenabschnittsteuerung und in einer dritten Bedienteil-Position (III) eine Phasenabschnittsteuerung realisiert sind.

14. Installationsgerät nach einem der Ansprüche 1 bis 7, **dadurch gekennzeichnet, dass** in der einen von zwei Bedienteil-Positionen eine Bewegungsmelder-Funktion und in der anderen eine Anwesenheitsdetektor-Funktion realisiert ist.

15. Installationsgerät nach einem der Ansprüche 1 bis 7, in Form eines Bewegungsmelders, **dadurch gekennzeichnet, dass** der Bedienteil (1) einen asymmetrischen Detektionswinkel definiert und je nach Ausrichtung des Bedienteils (1) unterschiedliche Detektionsbereiche festgelegt sind.

16. Installationsgerät nach einem der Ansprüche 1 bis 7, in Form eines Schalters, **dadurch gekennzeichnet, dass** in einer Bedienteil-Position ein unmittelbares Schalten, z.B. Einschalten, und in einer anderen Bedienteil-Position ein Schalten, z.B. Einschalten, mit zeitlicher Verzögerung vorgesehen ist.

## Claims

1. An electric installation device comprising an installation part (5) containing an electric-component and an operating part (1) provided to be connected to the installation part and containing at least one operating element (8, 9), **characterised in that** the operating part (1) is connectable to the installation part (5) in at least two positions rotated relative to each other by, e.g., 180°, with different electric connections (3, 4) made, different functions being realized in the different positions of the operating part (1) due to the different electrical connections made.

2. An installation device according to claim 1, **characterised in that** the operating part (1) is electrically connectable to the installation part (5) via at least partially rotation-symmetrically arranged contacts (3, 4).

3. An installation device according to claim 1 or 2, **characterised in that** the different functions are realized in the installation part (5).

4. An installation device according to claim 1 or 2, **characterised in that** the different functions are realized in the operating part (1).

5. An installation device according to any one of claims 1 to 4, **characterised in that** the contacts (3, 4) at the sides of installation part (5) and operating part (1) that face each other in the assembled state are centrally arranged (Figs. 1, 2).

6. An installation device according to any one of claims 1 to 5, **characterised in that** on one of the parts, i.e. the installation part (5) or the operating part (1), only one contact or only one group (2) of contacts (3) is excentrically provided which, depending on the position of the operating part (1) on the installation part (5), cooperates with one of several contacts, or one of several contact groups (4, 4', 4"), respectively, on the other part, i.e. the operating part (1) or the installation part (5), the contacts, or contact groups, respectively, on the other part, i.e. the operating part (1) or the installation part (5), being associated to the different functions.

7. An installation device according to claim 6, **characterised in that** two contacts, or contact groups (4, 4"), respectively, on the other part, i.e. the operating part (1) or the installation part (5), are arranged diametrically opposite each other.

8. An installation device according to any one of claims 1 to 7, **characterised in that** an illuminating function is integrated in the operating part (1) which is activated in one of two positions of the operating part (1) and deactivated in the other one.

9. An installation device according to claim 8, **characterised in that** a light-emitting diode (10) is provided in the operating part (1) which is poled in forward direction in the one position and in blocking direction in the other position.

10. An installation device according to any one of claims 1 to 7, **characterised in that** switching functions are provided with different switch-on or switch-off ramps.

11. An installation device according to any one of claims 1 to 7 in the form of a switch or dimmer, **characterised in that** in one of two operating part positions, an immediate switching on, or switching off, respectively, of a load current, and in the other position, a switching on, or switching off, respectively, with a gradual increasing or decreasing of the load current (soft start and soft stop, respectively) is provided.

12. An installation device according to any one of claims 1 to 7 in the form of a dimmer, **characterised in that** in one of the operating part positions, a phase angle control for a load current and in another operating part position, a reverse phase control is provided.

13. An installation device according to claim 7 in the form of a dimmer, **characterised in that** in a first operating part position (I), a phase angle control for a load current, in a second operating part position (II), a combined phase angle control and reverse phase control, and in a third operating part position (III), a reverse phase control are realized.

14. An installation device according to any one of claims 1 to 7, **characterised in that** in the one of two operating part positions, a motion detector function, and in the other one, a presence detector function is realized.

15. An installation device according to any one of claims 1 to 7 in the form of a motion detector, **characterised in that** the operating part (1) defines an asymmetrical detecting angle and, depending on the orientation of the operating part (1), different detection areas are defined.

16. An installation device according to any one of claims 1 to 7 in the form of a switch, **characterised in that** in one operating part position an immediate switching, e.g. switching on, and in another operating part position a switching, e.g. a switching on, with temporal delay is provided.

## Revendications

1. Appareil d'installation électrique avec une partie à encastrer (5) contenant des composants électriques et une partie de commande (1), contenant au moins un élément de commande (8, 9), destinée à la liaison avec cette dernière, **caractérisé en ce que** la partie de commande (1) peut être reliée à la partie à encastrer (5) moyennant la réalisation de différentes connexions électriques (3, 4) dans au moins deux positions décalées angulairement l'une par rapport à l'autre, par exemple de 180°, moyennant quoi différentes fonctions sont réalisées dans les différentes positions de la partie de commande (1) par suite des différentes connexions électriques.

2. Appareil d'installation électrique selon la revendication 1, **caractérisé en ce que** la partie de commande (1) peut être reliée électriquement à la partie à encastrer (5) par des contacts (3, 4) disposés au moins en partie selon une symétrie de rotation.

3. Appareil d'installation électrique selon la revendication 1 ou 2, **caractérisé en ce que** les différentes fonctions sont réalisées dans la partie à encastrer (5).

4. Appareil d'installation électrique selon la revendication 1 ou 2, **caractérisé en ce que** les différentes fonctions sont réalisées dans la partie de commande (1).

5. Appareil d'installation électrique selon l'une des revendications 1 à 4, **caractérisé en ce que** les contacts (3, 4) sur les faces de la partie à encastrer (5) et de la partie de commande (1) tournées l'une vers l'autre lors de l'assemblage sont disposés au centre (figures 1 et 2).

6. Appareil d'installation électrique selon l'une des revendications 1 à 5, **caractérisé en ce que** sur une des parties, partie à encastrer (5) ou partie de commande (1), un contact seulement ou un groupe (2) de contacts (3) seulement est prévu décentré, contact(s) qui, selon la position de la partie de commande (1) sur la partie à encastrer (5), travaille(nt) ensemble avec un de plusieurs contacts, respectivement avec un de plusieurs groupes de contacts (4, 4', 4") sur l'autre des parties, partie de commande (1) ou partie à encastrer (5), moyennant quoi les contacts, respectivement les groupes de contacts sur l'autre partie, partie de commande (1) ou partie à encastrer (5), sont affectés aux différentes fonctions.

7. Appareil d'installation électrique selon la revendication 6, **caractérisé en ce que** deux contacts ou deux groupes de contacts (4, 4") sur l'autre partie, partie de commande (1) ou partie à encastrer (5), sont disposés diamétralement opposés l'un à l'autre.

8. Appareil d'installation électrique selon l'une des revendications 1 à 7, **caractérisé en ce que** dans la partie de commande (1) est intégrée une fonction d'éclairage, qui est activée dans l'une de deux positions de la partie de commande (1) et désactivée dans l'autre.

9. Appareil d'installation électrique selon la revendication 8, **caractérisé en ce que** dans la partie de commande (1) est prévue une diode électroluminescente (10), qui est polarisée dans une position dans le sens de la conduction et dans l'autre position dans le sens du blocage.

10. Appareil d'installation électrique selon l'une des revendications 1 à 7, **caractérisé en ce que** des fonctions de commutation avec différents flancs de mise et de coupure du contact sont prévues.

11. Appareil d'installation électrique selon l'une des revendications 1 à 7, sous la forme d'un commutateur ou d'un variateur de lumière, **caractérisé en ce que** dans l'une de deux positions de la partie de commande est prévue une fermeture ou une coupure immédiate d'un courant de charge et dans l'autre position une fermeture ou une coupure avec une augmentation ou une diminution graduelle du courant de charge (soft start, respectivement soft stop).

12. Appareil d'installation électrique selon l'une des revendications 1 à 7, sous la forme d'un variateur de lumière, **caractérisé en ce que**, pour un courant de charge, une commande d'établissement de phase est prévue dans une des positions de la partie de commande et une commande de coupure de phase est prévue dans une autre position de la partie de commande.

13. Appareil d'installation électrique selon la revendication 7, sous la forme d'un variateur de lumière, **caractérisé en ce que** sont réalisés dans une première position (I) de la partie de commande une commande d'établissement de phase d'un courant de charge, dans une deuxième position (II) de la partie de commande une commande combinée d'établissement et de suppression d'une phase, et dans une troisième position (III) de la partie de commande une commande de suppression de phase.

14. Appareil d'installation électrique selon l'une des revendications 1 à 7, **caractérisé en ce que** dans une de deux positions de la partie de commande est réalisée une fonction de détection de mouvement et dans l'autre une fonction de détection de présence.

15. Appareil d'installation électrique selon l'une des revendications 1 à 7, sous la forme d'un détecteur de mouvement, **caractérisé en ce que** la partie de commande (1) définit un angle de détection asymétrique et **en ce que** différentes zones de détection sont fixées selon l'orientation de la partie de commande (1).

16. Appareil d'installation électrique selon l'une des revendications 1 à 7, sous la forme d'un commutateur, **caractérisé en ce que** dans une position de la partie de commande est prévue une commutation directe, par exemple l'établissement d'un courant, et **en ce que** dans une autre position de la partie de commande est prévue une commutation, par exemple l'établissement, avec temporisation d'un courant.
